# EUROPÄISCHE PATENTANMELDUNG

(11) **EP 4 744 957 A1**
(43) Veröffentlichungstag der Anmeldung: **20.05.2026**
(21) Anmeldenummer: 25216833.1
(22) Anmeldetag: 19.11.2025
(51) Int. Cl.: B60N 2/24, B60N 2/75

(54) **ARMLEHNE UND ARBEITSMASCHINE**

(30) Priorität: 19.11.2024 DE 102024133871
(71) Anmelder: Liebherr-Werk Bischofshofen GmbH, 5500 Bischofshofen (AT)
(72) Erfinder: PRÄAUER, Johann, 5600 St. Johann im Pongau (AT); UNTERBERGER, Robert, 5602 Wagrain (AT); BOLLA, Jonas, 5400 Hallein (AT)
(74) Vertreter: Lorenz Seidler Gossel Part. mbB

(57) **Zusammenfassung**

Die vorliegende Erfindung betrifft eine Armlehne für eine Arbeitsmaschine mit einer Halterung und einer Komponente, wobei die Komponente mehrere Positionen gegenüber der Halterung einnehmen kann, wobei die Armlehne Arretierungsmittel aufweist, die derart ausgebildet und angeordnet sind, um die Komponente in den jeweils gegenüber der Halterung eingenommenen Positionen mittels Formschluss zu arretieren.

## Beschreibung

Die vorliegende Erfindung betrifft eine Armlehne für eine Arbeitsmaschine mit einer Halterung und einer Komponente, wobei die Komponente mehrere Positionen gegenüber der Halterung einnehmen kann.

Bei Arbeitsmaschinen sind die Anforderungen an den Sitz- und Bedienkomfort für die tägliche Arbeit in der Arbeitsmaschine besonders hoch.

Dabei kommt neben der Qualität des Fahrersitzes der Arbeitsmaschine auch der ergonomischen Anordnung und Ausrichtung der Armlehne bzw. Armauflage besondere Bedeutung zu, insbesondere wenn die Arbeitsmaschine über eine Joysticksteuerung verfügt und daher ein Joystick an der Armlehne angeordnet ist.

Es ist bekannt, dass Armlehnen bzw. Armauflagen mit Joystick beispielsweise von der Firma Sittab angeboten und in Verkehr gebracht werden. Gattungsgemäße Armlehnen verfügen standardmäßig über verschiedenste Funktionen. So ist die ganze Armlehne als solche vertikal verstellbar ausgebildet. Die Armauflage ist zudem horizontal verschiebbar gelagert und es besteht die Möglichkeit die gesamte Armauflage vertikal zu verstellen und horizontal zu schwenken und/oder die Neigung zu verstellen. Der Joystick ist in der Regel für sich ebenfalls vertikal verstellbar.

Mit diesen Funktionen verfügen gattungsgemäße Armlehnen grundsätzlich über alle ergonomischen und technischen Einstellungen, die wünschenswert und sinnvoll sind. Zudem ist es für einen erleichterten Einstieg bzw. Zugang zum Fahrersitz vorgesehen, dass die gesamte Armauflage, gegebenenfalls mit daran angeordnetem Joystick, nach oben bzw. vertikal schwenkbar angeordnet ist. Es ist auch bekannt, dass andere Komponenten der Armlehne in verschiedenen Positionen positionierbar sind.

Die Arretierungs- bzw. Klemmvorrichtung zum Arretieren bzw. Klemmen von Komponenten der Armlehne funktioniert dabei reibschlüssig, was eine einfache und schnelle Verstellbarkeit der Positionen der Komponenten gewähren soll.

Bei Arbeitsmaschinen können die rauen Umgebungsbedingen und ständigen Erschütterungen, beispielsweise aufgrund der Unebenheiten des Untergrundes, dazu führen, dass sich die Arretierungs- bzw. Klemmvorrichtung zum Arretieren der einzelnen Komponenten der Armlehne im Betrieb lösen, sodass die einzelnen Komponenten der Armlehne zu ihren jeweiligen Halterungen Spiel erhalten, was sich nicht nur auf die Steuerung der Arbeitsmaschine negativ auswirkt, sondern darüber hinaus auch ein Sicherheitsrisiko mit sich bringt. In extremen Fällen kann es sogar vorkommen, dass sich bspw. die Armauflage von der Armlehne bzw. der Halterung zur Gänze löst.

Vor diesem Hintergrund liegt der vorliegenden Erfindung die Aufgabe zugrunde, eine oben genannte Armlehne, insbesondere im Hinblick auf die Arretierung einer Komponente der Armlehne, zu verbessern und die Nachteile des Stands der Technik zu mildern oder gänzlich zu beseitigen.

Diese Aufgabe wird durch den Gegenstand mit den Merkmalen des unabhängigen Anspruchs 1 gelöst. Vorteilhafte Weiterbildungen der Erfindung sind Gegenstand der abhängigen Ansprüche.

Demnach ist erfindungsgemäß vorgesehen, dass die Armlehne Arretierungsmittel aufweist, die derart ausgebildet und angeordnet sind, um die Komponente in den jeweils gegenüber der Halterung eingenommenen Positionen mittels Formschluss zu arretieren.

Die Armlehne kann mehrere Komponenten und mehrere Halterungen aufwiesen, wobei für jede dieser Kombinationen zwischen einer Komponente und einer Halterung Arretierungsmittel vorgesehen sein können, die derart ausgebildet und angeordnet sind, um die jeweilige Komponente in den jeweils gegenüber der jeweiligen Halterung eingenommenen Positionen mittels Formschluss zu arretieren. Es können auch mehrere Komponenten an einer Halterung angeordnet sein.

Die Halterung kann die Halterung für die Armlehne sein, mit der die Armlehne an der Arbeitsmaschine, bspw. einem Fahrersitz der Arbeitsmaschine befestigt werden kann.

Die Arretierungsmittel können eine Arretierungsvorrichtung oder Klemm- und/oder Befestigungsvorrichtung bilden.

Vorzugsweise ist vorgesehen, dass eine, mehrere oder jede Arretierungsvorrichtung der Armlehne, zumindest die Arretierungsvorrichtung zwischen Armauflage und der Halterung der Armlehne, formschlüssig ausgebildet sind.

Vorzugsweise ist vorgesehen, dass die Komponente eine Armauflage ist und gegenüber der Halterung mit einer vertikal verlaufenden Schwenkachse schwenkbar ist und die Positionen horizontale Schwenkwinkel zwischen der Armauflage und der Halterung sind.

Unter einer vertikal verlaufenen Schwenkachse ist vorzugsweise zu verstehen, dass die Schwenkachse in einem eingebauten Zustand der Armlehne grundsätzlich vertikal ausgerichtet ist und/oder einen Winkel zur exakten Horizontalen zwischen 45° und 90° einnimmt.

Vorzugsweise liegt ein horizontaler Schwenkwinkel in einem eingebauten Zustand der Armlehne in einer Ebene, die einen Winkel zu exakten Vertikalen zwischen 45° und 90° einnimmt.

Vorzugsweise ist vorgesehen, dass die Arretierungsmittel wenigstens erste Eingriffselemente, insbesondere Zähne, die einen zusammenhängenden oder unterbrochenen, insbesondere kreisringförmigen oder kreisringsegmentförmigen, ersten Eingriffsbereich bilden und an der Halterung, insbesondere an einer oberen Fläche der Halterung, angeordnet sind und zweite Eingriffselemente, insbesondere Zähne, die einen zusammenhängenden oder unterbrochenen, insbesondere kreisringförmigen oder kreisringsegmentförmigen, zweiten Eingriffsbereich bilden und an der Komponente, insbesondere an einer unteren Fläche der Komponente, angeordnet sind, umfassen, wobei die Eingriffselemente jeweils dazu ausgebildet und angeordnet sind, um miteinander in formschlüssigen Eingriff gebracht zu werden.

Vorzugsweise ist vorgesehen, dass die ersten Eingriffselemente und/oder die zweiten Eingriffselemente aus einer, insbesondere hochfesten, Aluminium-Zink-Legierung bestehen oder damit beschichtet sind.

Vorzugsweise ist vorgesehen, dass die ersten Eingriffselemente und/oder der zweiten Eingriffselemente eine Teilung von 1° bis 5°, insbesondere von 3°, aufweisen.

Vorzugsweise ist vorgesehen, dass die gegenüberliegenden Flanken der ersten Eingriffselemente und/oder zweiten Eingriffselemente einen Winkel zwischen 45° und 135°, insbesondere zwischen 75° und 105°, vorzugsweise einen Winkel von 90° bilden.

Vorzugsweise ist vorgesehen, dass die Summe eines Winkels zwischen den gegenüberliegenden Flanken der ersten Eingriffselemente und eines Winkels zwischen den gegenüberliegenden Flanken der zweiten Eingriffselemente 180° ist.

Vorzugsweise ist vorgesehen, dass die ersten Eingriffselemente und die zweiten Eingriffselemente in radialer Richtung gegengleich konisch ausgebildet sind, wobei die Höhe der ersten Eingriffselemente von innen nach außen zunimmt und die Höhe der zweiten Eingriffselemente von innen nach außen abnimmt oder wobei die Höhe der ersten Eingriffselemente von innen nach außen abnimmt und die Höhe der zweiten Eingriffselemente von innen nach außen zunimmt.

Vorzugsweise ist vorgesehen, dass der erste und der zweite Eingriffsbereich unterbrochen, insbesondere kreisringsegmentförmig, ausgebildet sind wobei sich ein Abschnitt des ersten Eingriffsbereichs über einen Winkel, der mindestens um eine Teilung der ersten und/oder zweiten Eingriffselemente größer ist, als der Winkel über den sich der Abschnitt des zweiten Eingriffsbereichs, der mit dem Abschnitt des ersten Eingriffsbereichs in Eingriff gebracht werden kann, erstreckt oder ein Abschnitt des zweiten Eingriffsbereichs über einen Winkel, der mindestens um eine Teilung der ersten und/oder zweiten Eingriffselemente größer ist, als der Winkel über den sich der Abschnitt des zweiten Eingriffsbereichs, der mit dem Abschnitt des zweiten Eingriffsbereichs in Eingriff gebracht werden kann, erstreckt

Vorzugsweise ist vorgeshen, dass die Arretierungsmittel wenigstens ein erstes an der Halterung, insbesondere an einer oberen Fläche der Halterung angeordnetes bzw. ausgebildetes Führungselement und wenigstens ein zweites an der Komponente, insbesondere an einer unteren Fläche der Komponente, angeordnetes bzw. ausgebildetes Führungselement umfassen, wobei die Führungselemente jeweils dazu ausgebildet und angeordnet sind, um miteinander in formschlüssigen Eingriff gebracht zu werden.

Vorzugsweise ist vorgesehen, dass das wenigstens eine erste Führungselement von einem Bolzen und/oder einem insbesondere kreisring- oder kreisringsegmentförmigen Führungssteg und das zweite Führungselement von einer korrespondierenden, insbesondere durchgängigen, nutenförmigen Aufnahme gebildet ist, oder umgekehrt.

Vorzugsweise ist vorgesehen, dass die Arretierungsmittel wenigstens einen ersten Eingriffsbereich mit Eingriffselementen und wenigstens ein erstes Führungsmittel, die jeweils an der Halterung angeordnet bzw. ausgebildet sind und wenigstens einen zweiten Eingriffsbereich mit Eingriffselementen und wenigstens ein zweites Führungselement, die an der Komponente angeordnet bzw. ausgebildet sind, umfassen, wobei die Eingriffselemente und die Führungselemente der Eingriffsbereiche jeweils dazu ausgebildet und angeordnet sind, um miteinander in formschlüssigen Eingriff gebracht zu werden.

Vorzugsweise ist vorgesehen, dass der erste Eingriffsbereich und/oder das wenigstens eine erste Führungselement um eine Durchtrittsöffnung, insbesondere Bohrung, der Halterung und der zweite Eingriffsbereich und/oder das wenigstens zweite Führungselement um eine Durchtrittsöffnung, insbesondere Bohrung, der Komponente angeordnet ist, wobei die Durchtrittsöffnungen in einem zusammengebauten Zustand der Armlehne fluchten.

Vorzugsweise ist vorgesehen, dass die Armlehne Begrenzungsmittel aufweist, die derart ausgebildet und angeordnet sind, um einen Bereich, insbesondere einen horizontalen Schwenkwinkelbereich, zu begrenzen im dem sich die gegenüber der Halterung eingenommenen Positionen der Komponente befinden können.

Die Armlehne weist vorzugsweise eine begrenzte Schwenkfunktion auf.

Vorzugsweise ist vorgesehen, dass die Armlehne eine Schwenkwinkelbegrenzung, insbesondere für die Begrenzung eines Schwenkwinkels der Armauflage, aufweist.

Vorzugsweise ist vorgesehen, dass die Begrenzungsmittel auf der Komponente angeordnete Anschlagpunkte und auf der Halterung angeordnete Anschlagflächen umfassen.

Vorzugsweise ist vorgesehen, dass die Arretierungsmittel eine Führungshülse umfassen, die derart ausgebildet und angeordnet ist, dass die Komponente und die Halterung sich nicht unbeabsichtigt voneinander separieren lassen, wobei die Führungshülse mit der Komponente verbunden, insbesondere verschraubt, ist und in einer Durchtrittsöffnung, insbesondere Bohrung, der Komponente und/oder in einer Durchtrittsöffnung, insbesondere Bohrung, der Halterung angeordnet ist und einen Bund aufweist, der derart ausgebildet ist, um an einem Absatz der Bohrung anzuliegen, dass ein Durchtreten der Führungshülse durch die Durchtrittsöffnung von der Halterung in Richtung der Komponente verhindert wird.

Vorzugsweise ist vorgesehen, dass eine "Verliersicherheit" in Form einer Führungshülse für den Klemmhebel vorhanden ist, die sicherstellt, dass sich die Armauflage und die Halterung nicht unbeabsichtigt vollständig voneinander lösen können.

Vorzugsweise ist vorgesehen, dass die Arretierungsmittel einen Klemmhebel zum Aufbringen einer Klemmkraft zwischen der Komponente und der Halterung umfassen, wobei der Klemmhebel insbesondere mit der Führungshülse verschraubt bzw. verschraubbar ist.

Die Armauflage kann eine Bedieneinheit, wie bspw. einen Joystick, aufweisen. Die gesamte Armlehne kann als Bedieneinheit bezeichnet werden. Selbstverständlich sind von der Erfindung grundsätzlich auch Armlehnen ohne Joystick umfasst.

Die Erfindung betrifft auch eine Arbeitsmaschine, insbesondere Radlader, mit einer erfindungsgemäßen Armlehne.

Die Arbeitsmaschine ist vorzugsweise eine Erdbewegungs- oder Bergbaumaschine, insbesondere ein Radlader, eine Forstmaschine, ein Fahrzeugkran oder ein Gabelstapler.

An dieser Stelle wird darauf hingewiesen, dass die Begriffe "ein" und "eine" nicht zwingend auf genau eines der Elemente verweisen, wenngleich dies eine mögliche

Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigen:
- Fig. 1:: eine Seitenansicht eines Details einer Ausführungsform einer erfindungsgemäßen Armlehne und jeweils eine perspektivische Ansicht eines Details eines Bauteils einer Halterung und eines Details eines Bauteils einer Komponente der Ausführungsform.
- Fig. 2:: eine Schnittansicht von Eingriffselementen einer Ausführungsform einer erfindungsgemäßen Armlehne.
- Fig. 3:: eine Skizze eines Eingriffsbereichs eines Bauteils einer Armauflage einer Ausführungsform einer erfindungsgemäßen Armlehne.
- Fig. 4:: eine Skizze von Eingriffselementen einer Ausführungsform einer erfindungsgemäßen Armlehne.
- Fig. 5:: eine perspektivische Darstellung eines Details eines Bauteils einer Halterung einer Ausführungsform einer erfindungsgemäßen Armlehne.
- Fig. 6:: eine Skizze eines Details einer Halterung einer Ausführungsform einer erfindungsgemäßen Armlehne.
- Fig. 7:: eine perspektivische Darstellung eines Details eines Bauteils einer Armauflage einer Ausführungsform einer erfindungsgemäßen Armlehne.
- Fig. 8:: eine Skizze eines Details einer Armauflage einer Ausführungsform einer erfindungsgemäßen Armlehne.
- Fig. 9:: eine perspektivische Darstellung eines Details einer Ausführungsform einer erfindungsgemäßen Armlehne.
- Fig. 10:: eine Draufsicht eines Details einer Ausführungsform einer erfindungsgemäßen Armlehne.
- Fig. 11:: eine Schnittansicht eines Details einer Ausführungsform einer erfindungsgemäßen Armlehne.
- Fig. 12:: eine perspektivische Ansicht einer Ausführungsform einer erfindungsgemäßen Armlehne.
- Fig. 13:: eine perspektivische Ansicht einer Ausführungsform einer erfindungsgemäßen Armlehne.
- Fig. 14:: eine perspektivische Ansicht einer Ausführungsform einer erfindungsgemäßen Armlehne.
- Fig. 15:: eine schematische Darstellung einer weiteren Ausführungsforn einer erfindungsgemäßen Armlehne

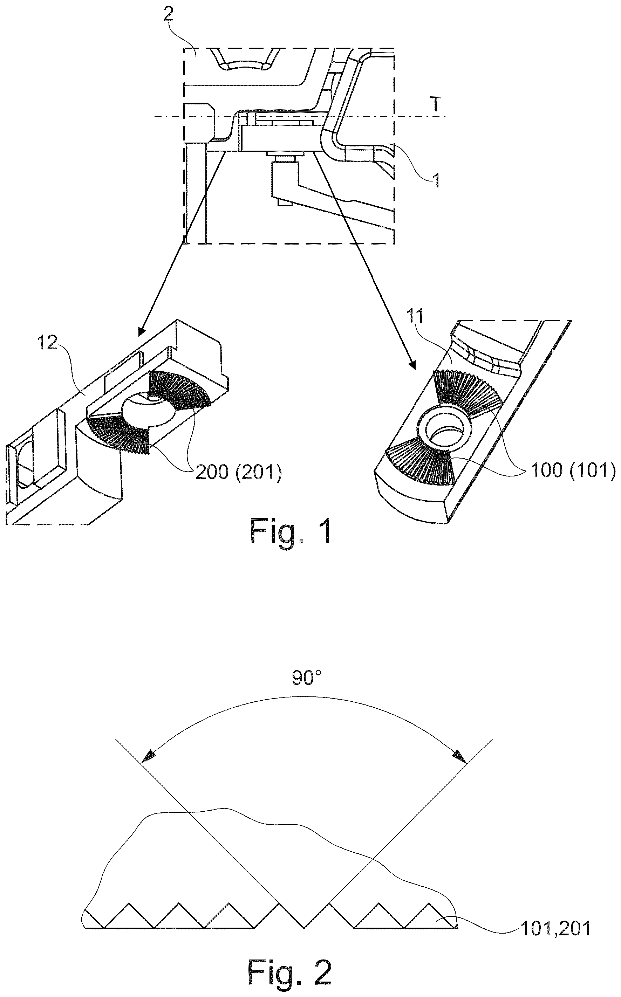

In Fig. 1 ist in der oberen Darstellung ein Detail einer Armlehne mit einer Halterung 1 und einer Armauflage 2 dargestellt.

Die Arretierung der gegenüber der Halterung 1 eingenommenen Schwenkwinkel der Armauflage 2 erfolgt formschlüssig.

Zwischen der Halterung 1 und der Armauflage 2 ist eine Trennebene T vorhanden, wie dies in der oberen Darstellung aus Fig. 1 symbolisch dargestellt ist.

Diese Trennebene T verläuft durch ein Bauteil 11 der Halterung 1 und ein Bauteil 12 der Armauflage 2 und trennt eine obere Fläche der Halterung 1 bzw. des Bauteils 11 von einer unteren Fläche der Armauflage 2 bzw. des Bauteils 12.

Die Bauteile 11 und 12 sind in Fig. 1 unten gezeigt.

Das Bauteil 11 weist auf der oberen Fläche einen ersten Eingriffsbereich 100 mit ersten Eingriffselementen 101 auf. Der erste Eingriffsbereich 100 besteht aus zwei kreisringsegmentförmigen Abschnitten, die um eine Bohrung des Bauteils 11 angeordnet sind, wie dies aus Fig. 1 unten rechts hervorgeht.

Das Bauteil 12 weist auf der unteren Fläche einen zweiten Eingriffsbereich 200 mit zweiten Eingriffselementen 201 auf. Der zweite Eingriffsbereich 200 besteht aus zwei kreisringsegmentförmigen Abschnitten, die um eine Bohrung des Bauteils 12 angeordnet sind, wie dies aus Fig. 1 unten links hervorgeht.

In einem montierten Zustand der Armlehne sind die Eingriffsbereiche 100 und 200 in Eingriff.

Die korrespondierenden Eingriffsbereiche 100 und 200 der Halterung 1 und der Armauflage 2 weisen jeweils mehrere feinmechanische Eingriffselemente 101 und 201 in Form von Zähnen auf.

In anderen Worten sind die korrespondierenden Eingriffsbereiche 100 und 200 jeweils als kreisringsegmentförmige Zahnscheibe mit zwei Abschnitten ausgebildet bzw. weisen je eine zahnscheibenförmige Erhebung zum gegenseitigen formschlüssigen Ineinandergreifen auf.

Die Eingriffsbereiche 100 und 200 weisen jeweils eine Verzahnung auf. Die Zähne verlaufen sternförmig um die jeweilige Bohrung und bilden Kanäle aus.

Die Eingriffselemente 101 und 201 sind aus einer hochfesten Aluminium-Zink Legierung gebildet bzw. damit beschichtet.

Die Oberfläche der Eingriffsbereiche 100 und 200 ist jeweils gefräst und weist jeweils einem Mittenrauwert RA von 6.3 auf, womit die Oberfläche der Eingriffsbereiche 100 und 200 jeweils geschruppt ist.

Wie dies aus Fig. 2 hervorgeht, schließen die gegenüberliegenden Seitenflächen oder Flanken der Eingriffselemente 101 und 201 jeweils einen Winkel von 90° ein.

Vorzugsweise korrespondieren die Eingriffselemente 101 und 201 indem sich die jeweiligen Winkel zwischen den gegenüberliegenden Seitenflächen oder Flanken der Eingriffselemente 101 und 201 zu 180° addieren.

Die Seitenflächen oder Flanken der Eingriffselemente 101 können bspw. jeweils einen Winkel von 75° und die Seitenflächen oder Flanken der Eingriffselemente 201 können jeweils einen Winkel von 105° einschließen. Denkbar ist auch die umgekehrte Winkelzuordnung.

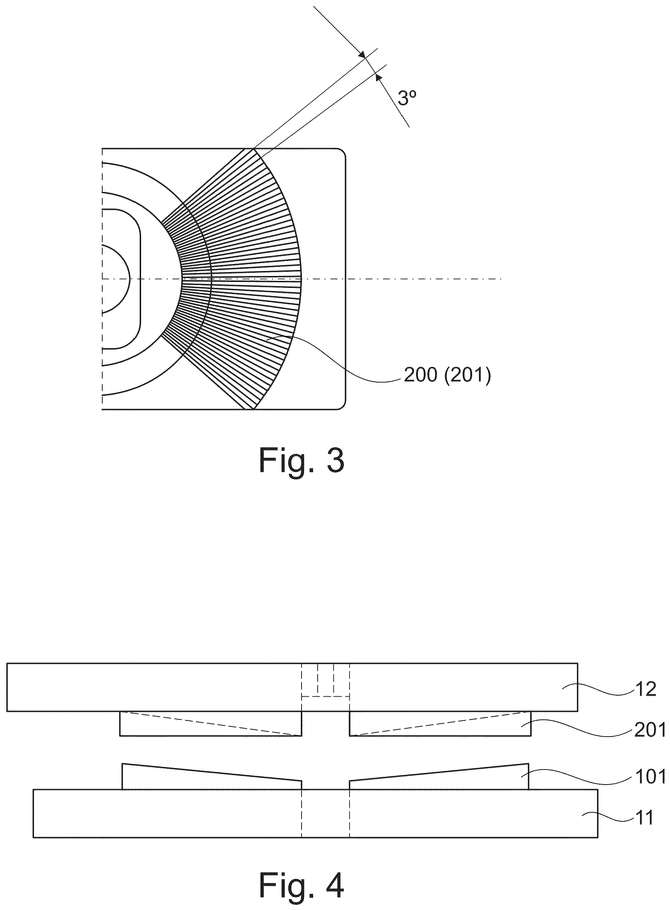

Die Eingriffselemente 101 und 201 bzw. Zahnkanäle verlaufen aufgrund der kreisringsegmentförmigen Ausbildung der Eingriffsbereiche 100 und 200 in horizontaler Ausrichtung konisch, wobei die Teilung bzw. Zahnteilung am äußeren Umfang des Kreisringsegments in 3° Schritten erfolgt, wie dies beispielhaft für den Eingriffsbereich 200 aus Fig. 3 hervorgeht. Die Teilung kann ein Teilungswinkel sein.

Diese Zahnteilung ergibt bei einem gewünschten Schwenkwinkel von 12° für die gesamte Armauflage 2 eine 4-stufige Schwenkwinkelverstellung. Diese Werte haben sich als besonders praktikabel und bedienerfreundlich herausgestellt. Selbstverständlich sind andere Ausbildungen ebenso geeignet, die genaue und stabile horizontale Schwenkung der Armauflage 2 mittels bzw. aufgrund der feinmechanischen Eingriffselemente 101 und 201 sicherzustellen.

In Fig. 4 ist in einem Schnitt der Verlauf der Eingriffselemente 101, die an der oberen Fläche des Bauteils 11 der Halterung 1 und 201, die an der unteren Fläche des Bauteils 12 der Armauflage 2 angeordnet sind, dargestellt.

Die Berührungsebenen der korrespondierenden Eingriffsflächen sind für einen sicheren Eingriff und eine präzise Führung während des Verschwenkens gegengleich konisch ausgebildet. Dies bedeute in anderen Worten, dass die Berührungsebene, also die Oberfläche der Eingriffselemente 101 des unteren Eingriffsbereichs 100 trichterförmig verläuft, wobei die Tiefe der Eingriffselemente 101 bzw. der Zahnkanäle von innen nach außen zunimmt, während die in Fig. 4 strichliert dargestellte obere Eingriffsfläche kegelstumpfförmig ausgebildet ist, wobei die Höhe der Eingriffselemente 201 von innen nach außen zunimmt.

Selbstverständlich ist auch eine umgekehrte Anordnung möglich. Es wäre auch denkbar, die Eingriffselemente 101 und 201 bzw. die Kanäle durchgehend gleich tief auszugestalten, in diesem Fall müsste sich geometrisch bedingt allerdings der Winkel zwischen den Seitenflächen von innen nach außen verändern, was frästechnisch einen ungemein höheren Aufwand mit sich bringen würde.

Es ist eine Schwenkwinkelbegrenzung für den Schwenkwinkel der Armauflage 2 vorhanden.

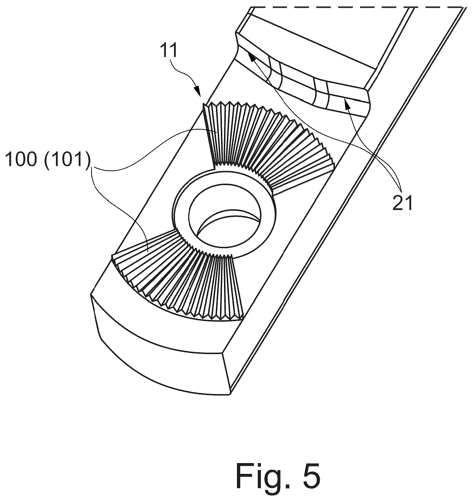

An dem Bauteil 11 der Halterung 1 sind zwei Anschlagflächen 21 ausgebildet, die den Schwenkwinkel der Armauflage 2 beschränken, wie dies aus Fig. 5 hervorgeht.

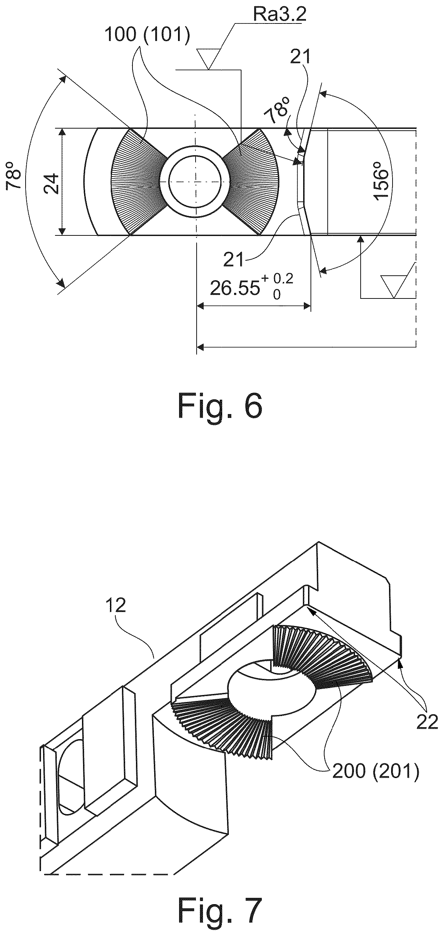

Die zwei Anschlagflächen 21 sind in einem Winkel von 156° zueinander angeordnet, wie dies aus Fig. 6 hervorgeht.

Der Winkel von 156° ergibt sich bei einem vorgesehenen maximalen Schwenkwinkel von 12° in beide Richtungen durch die folgende Rechnung: 180° - 24° = 156°.

In Fig. 7 ist das Bauteil 12 dargestellt, wobei in Fig. 7 Anschlagpunkte 22 für den Anschlag an die Anschlagflächen 21 des Bauteils 11 markiert sind.

Die Anschlagpunkte 22 der Armauflage 2 können beispielsweise gefast, gehärtet und/oder mit Gummi überzogen oder aber auch ohne zusätzliche Bearbeitung ausgeführt sein.

Die Anschlagflächen 21 und die Anschlagpunkte 22 bilden Begrenzungsmittel 20.

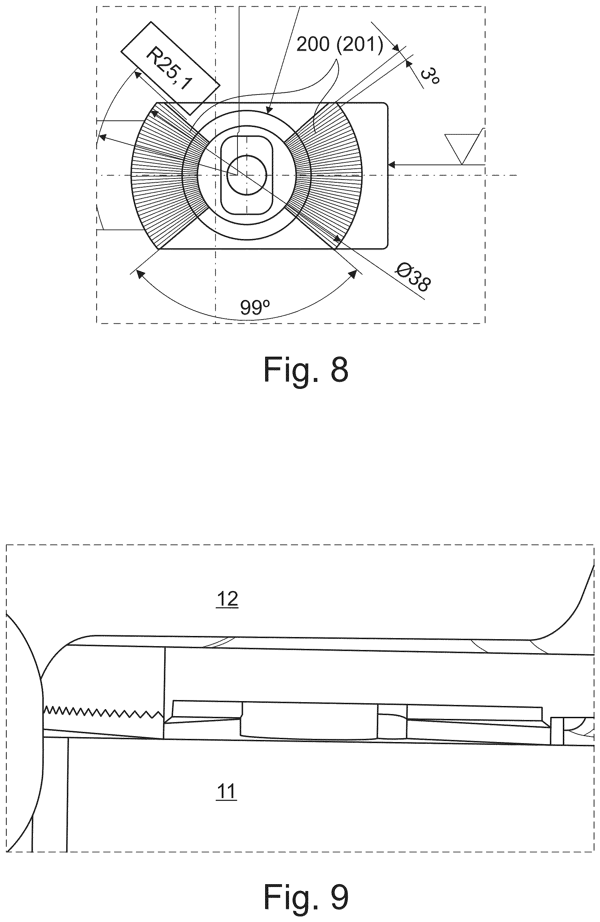

In Fig. 8 sind die beiden Abschnitte des Eingriffsbereichs 200 mit den Eingriffselementen 201 dargestellt.

Die beiden Abschnitte in Form von Kreisringsegmenten des Eingriffsbereichs 200 der Armauflage 2 erstrecken sich jeweils über einen Winkel von 81° und sind somit jeweils größer als die beiden Abschnitte in Form von Kreisringsegmenten des Eingriffsbereichs 100 der Halterung 1, die sich jeweils über einen Winkel von 78° erstrecken.

Die Differenz von 3° sind dabei zur Hälfte auf beiden Seiten jedes Abschnitts des Eingriffsbereichs 200 der Armauflage 2 addiert und entsprechen der Breite eines halben Eingriffselements 201 bzw. Zahnkanals. Dadurch ist auch in der letzten Stufe des Schwenkwinkelbereichs ein stabiler Eingriff zwischen den beiden Eingriffsbereichen sichergestellt oder gegeben.

Fig. 9 zeigt die beiden Bauteile 11 und 12, wobei die jeweiligen Eingriffsbereiche 100 und 200 in Eingriff stehen.

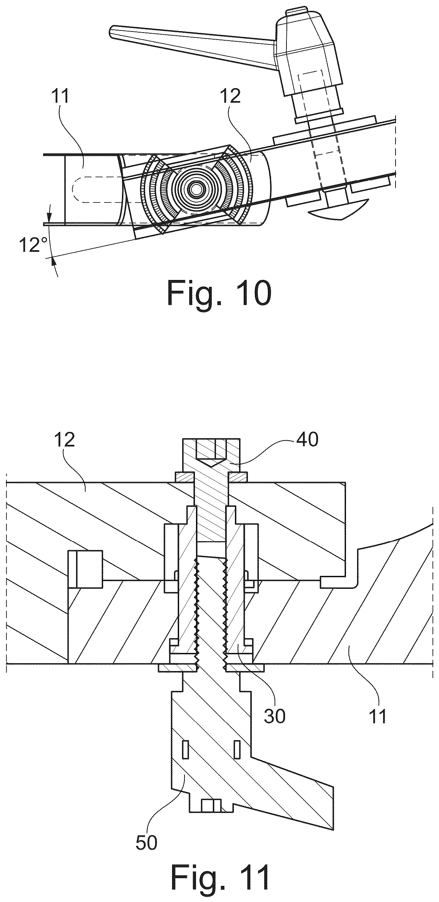

Fig. 10 zeigt eine Anordnung der beiden Bauteile 11 und 12, wobei diese mit einem Schwenkwinkel von 12° gegeneinander verschwenkt sind.

Es ist eine Führungshülse als "Verliersicherung" vorgesehen.

Fig. 11 zeigt die Anordnung einer Führungshülse 30 in den Bauteilen 11 und 12.

Die Führungshülse 30 ist armauflagenseitig, also an dem Bauteil 12 mittels einer Verschraubung 40 befestigt und dient von Seiten der Halterung 1 bzw. des Bauteils 11 als Aufnahme für den Klemmhebel 50. Weil die Führungshülse 30 im Bereich ihrer Aufnahmeöffnung für den Klemmhebel 50 einen umlaufenden Flansch oder Bund aufweist, dessen Durchmesser größer als die Durchtrittsöffnung in der Halterung 1 bzw. dem Bauteil 11 ist, wird sichergestellt, dass sich die Halterung 1 bzw. das Bauteil 11 nicht von der Armlehne 2 bzw. von dem Bauteil 12 lösen kann, solange die Führungshülse 30 mit der Armauflage 2 bzw. dem Bauteil 12 verschraubt ist. Zudem deckt sich die Drehachse der Seitenverstellung mit der Längsachse der Führungshülse 30 und des Klemmhebels 50.

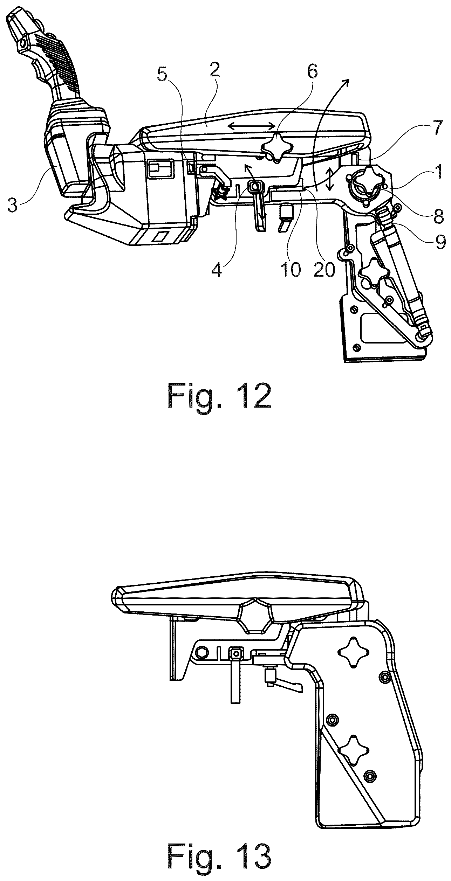

Die Armlehne aus Fig. 12 weist eine Halterung 1 und eine Armauflage 2 auf. Die Halterung 1 ist eine Halterung für die Armlehne und die Armauflage 2. Die Halterung 1 kann auch als Armlehnenhalterung bezeichnet werden.

Die Armlehne aus Fig. 12 weist ferner einen an der Armlehne 1 angeordneten Joystick 3, eine Neigungsverstellung 4, eine Höhen- und Neigungsverstellung 5 eines Gebergriffs, eine Längsverstellung 6 für die Armauflage 2, eine Höhenverstellung 7 und eine vertikale Schwenkvorrichtung 8 für das vertikale Schwenken der Armauflage 2, bspw. zum Zurückschwenken der Armauflage 2 beim Ein- und Aussteigen, auf. Ferner weist die Armlehne aus Fig. 12 einen induktiven Sensor 9 anstatt eines Mikroschalters für eine Qualitätsverbesserung auf.

Der Drehpunkt für die Neigungsverstellung 4 ist mit dem Stern in Fig. 12 symbolisch markiert.

Die durch die Neigungsverstellung 4, die Längsverstellung 6 für die Armauflage, die Höhenverstellung 7 und die vertikale Schwenkvorrichtung 8 ermöglichten Bewegungen von Bauteilen der Armauflage sind in Fig. 12 mit Pfeilen symbolisch dargestellt.

Die Armauflage 2 ist gegenüber der Halterung 1 mit einer vertikal verlaufenden Schwenkachse, also in anderen Worten horizontal, schwenkbar.

Zum Arretieren der gegenüber der Halterung 1 eingenommenen Schwenkwinkel der Armauflage 2 weist die Armlehne Arretierungsmittel 10 auf.

Die Arretierungsmittel 10 umfassen den ersten Eingriffsbereich 100 und den zweiten Eingriffsbereich 200 sowie die Führungshülse 30 und den Klemmhebel 50.

Zum Begrenzen der gegenüber der Halterung 1 einnehmbaren Schwenkwinkel der Armauflage 2 weist die Armlehne Begrenzungsmittel 20 auf.

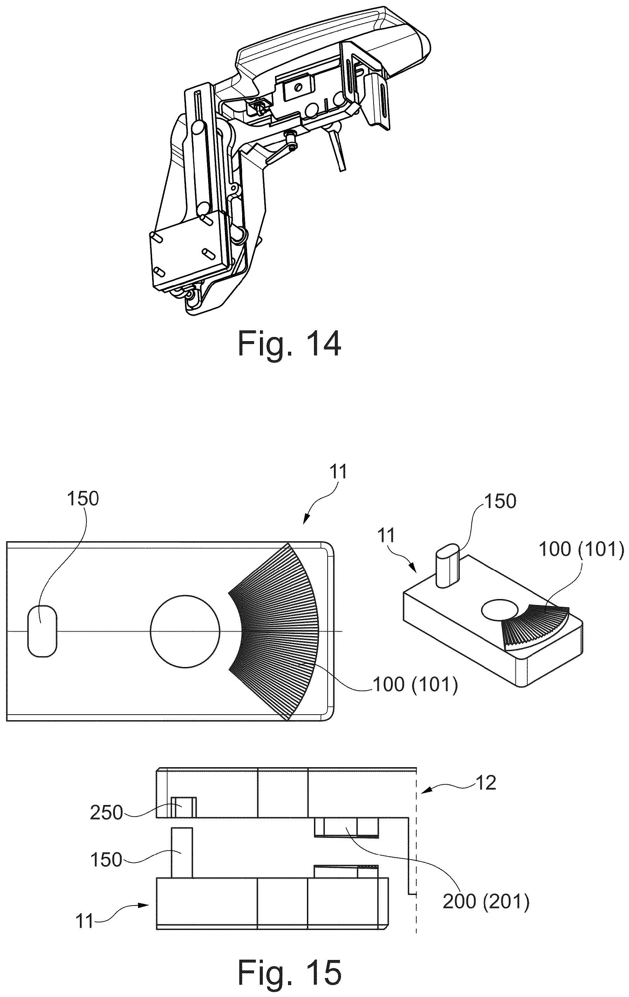

In den Fig. 13 und 14 sind Armlehnen ohne Joystick dargestellt.

Eine weitere Ausführungsform einer erfindungsgemäßen Armlehne ist in Fig. 15 dargestellt. Wie aus den beiden oberen Abbildungen hervorgeht, weist das Bauteil 11 auf der oberen Fläche einen ersten Eingriffsbereich 100 mit ersten Eingriffselementen 101 auf. Dieser erste Eingriffsbereich 100 besteht aus einem kreisringsegmentförmigen Abschnitt, der um eine Bohrung des Bauteils 11 angeordnet ist. Weiters ist auf der oberen Fläche des Bauteils 11 ein erstes Führungselement 150 in Form eines Steges ausgebildet, der auf der dem ersten Eingriffsbereich 100 gegenüberliegenden Seite um eine Bohrung des Bauteils 11 angeordnet ist.

Aus der unteren Abbildung in Fig. 15 ist ersichtlich, dass das Bauteil 12 auf der unteren Fläche neben dem zweiten Eingriffsbereich 200 mit zweiten Eingriffselementen 201 weiters ein zweites Führungselement 250 aufweist. Dieses Führungselement ist als nutenförmige Ausnehmung ausgebildet, wobei sowohl die Führungselemente 150, 250 und die Eingriffsbereiche 100, 200 jeweils dazu ausgebildet und angeordnet sind, um miteinander in formschlüssigen Eingriff gebracht zu werden.

## Patentansprüche

1. Armlehne für eine Arbeitsmaschine mit einer Halterung und einer Komponente, wobei die Komponente mehrere Positionen gegenüber der Halterung einnehmen kann, **dadurch gekennzeichnet, dass** die Armlehne Arretierungsmittel aufweist, die derart ausgebildet und angeordnet sind, um die Komponente in den jeweils gegenüber der Halterung eingenommenen Positionen mittels Formschluss zu arretieren.

2. Armlehne nach Anspruch 1, **dadurch gekennzeichnet, dass** die Komponente eine Armauflage ist und gegenüber der Halterung mit einer vertikal verlaufenden Schwenkachse schwenkbar ist und die Positionen horizontale Schwenkwinkel zwischen der Armauflage und der Halterung sind.

3. Armlehne nach Anspruch 1 oder 2, **dadurch gekennzeichnet, dass** die Arretierungsmittel wenigstens erste Eingriffselemente, insbesondere Zähne, die einen zusammenhängenden oder unterbrochenen, insbesondere kreisringförmigen oder kreisringsegmentförmigen, ersten Eingriffsbereich bilden und an der Halterung, insbesondere an einer oberen Fläche der Halterung, angeordnet sind und wenigstens zweite Eingriffselemente, insbesondere Zähne, die einen zusammenhängenden oder unterbrochenen, insbesondere kreisringförmigen oder kreisringsegmentförmigen, zweiten Eingriffsbereich bilden und an der Komponente, insbesondere an einer unteren Fläche der Komponente, angeordnet sind, umfassen, wobei die Eingriffselemente jeweils dazu ausgebildet und angeordnet sind, um miteinander in formschlüssigen Eingriff gebracht zu werden.

4. Armlehne nach Anspruch 3, **dadurch gekennzeichnet, dass** die ersten Eingriffselemente und/oder die zweiten Eingriffselemente aus einer, insbesondere hochfesten, Aluminium-Zink-Legierung bestehen oder damit beschichtet sind.

5. Armlehne nach Anspruch 3 oder 4, **dadurch gekennzeichnet, dass** die ersten Eingriffselemente und/oder die zweiten Eingriffselemente eine Teilung von 1° bis 5°, insbesondere von 3°, aufweisen und/oder dass die gegenüberliegenden Flanken der ersten Eingriffselemente und/oder zweiten Eingriffselemente einen Winkel zwischen 45° und 135°, insbesondere zwischen 75° und 105°, vorzugsweise einen Winkel von 90° bilden.

6. Armlehne nach einem der Ansprüche 3 bis 5, **dadurch gekennzeichnet, dass** die Summe eines Winkels zwischen den gegenüberliegenden Flanken der ersten Eingriffselemente und eines Winkels zwischen den gegenüberliegenden Flanken der zweiten Eingriffselemente 180° ist und/oder dass die ersten Eingriffselemente und die zweiten Eingriffselemente in radialer Richtung gegengleich konisch ausgebildet sind, wobei die Höhe der ersten Eingriffselemente von innen nach außen zunimmt und die Höhe der zweiten Eingriffselemente von innen nach außen abnimmt oder wobei die Höhe der ersten Eingriffselemente von innen nach außen abnimmt und die Höhe der zweiten Eingriffselemente von innen nach außen zunimmt.

7. Armlehne nach einem der Ansprüche 3 bis 6, **dadurch gekennzeichnet, dass** der erste und der zweite Eingriffsbereich unterbrochen, insbesondere kreisringsegmentförmig, ausgebildet sind und sich ein Abschnitt des ersten Eingriffsbereichs über einen Winkel, der mindestens um eine Teilung der ersten und/oder zweiten Eingriffselemente größer ist, als der Winkel über den sich der Abschnitt des zweiten Eingriffsbereichs, der mit dem Abschnitt des ersten Eingriffsbereichs in Eingriff gebracht werden kann, erstreckt oder sich ein Abschnitt des zweiten Eingriffsbereichs über einen Winkel, der mindestens um eine Teilung der ersten und/oder zweiten Eingriffselemente größer ist, als der Winkel über den sich der Abschnitt des zweiten Eingriffsbereichs, der mit dem Abschnitt des zweiten Eingriffsbereichs in Eingriff gebracht werden kann, erstreckt.

8. Armlehne nach einem der Ansprüche 1 bis 7, **dadurch gekennzeichnet, dass** die Arretierungsmittel wenigstens ein erstes an der Halterung, insbesondere an einer oberen Fläche der Halterung angeordnetes bzw. ausgebildetes Führungselement und wenigstens ein zweites an der Komponente, insbesondere an einer unteren Fläche der Komponente, angeordnetes bzw. ausgebildetes Führungselement umfassen, wobei die Führungselemente jeweils dazu ausgebildet und angeordnet sind, um miteinander in formschlüssigen Eingriff gebracht zu werden, wobei vorzugsweise vorgesehen ist, dass das wenigstens eine erste Führungselement von einem Bolzen und/oder einem insbesondere kreisring- oder kreisringsegmentförmigen Führungssteg und ein zweites Führungselement von einer korrespondierenden, insbesondere durchgängigen, nutenförmigen Aufnahme gebildet ist, oder umgekehrt.

9. Armlehne nach einem der Ansprüche 1 bis 8, **dadurch gekennzeichnet, dass** die Arretierungsmittel wenigstens einen ersten Eingriffsbereich mit Eingriffselementen und wenigstens ein erstes Führungselement, die jeweils an der Halterung angeordnet bzw. ausgebildet sind und wenigstens einen zweiten Eingriffsbereich mit Eingriffselementen und wenigstens ein zweites Führungselement, die an der Komponente angeordnet bzw. ausgebildet sind, umfassen, wobei die Eingriffselemente und das/die Führungselemente der Halterung dazu ausgebildet und angeordnet sind, um mit den Eingriffselementen und dem/den Führungselement(en) der Komponente in formschlüssigen Eingriff gebracht zu werden, und umgekehrt.

10. Armlehne nach einem der Ansprüche 3 bis 9, **dadurch gekennzeichnet, dass** der erste Eingriffsbereich und/oder das wenigstens eine erste Führungselement um eine Durchtrittsöffnung, insbesondere Bohrung, der Halterung und der zweite Eingriffsbereich und/oder das wenigstens zweite Führungselement um eine Durchtrittsöffnung, insbesondere Bohrung, der Komponente angeordnet ist, wobei die Durchtrittsöffnungen in einem zusammengebauten Zustand der Armlehne fluchten.

11. Armlehne nach einem der vorhergehenden Ansprüche, **dadurch gekennzeichnet, dass** die Armlehne Begrenzungsmittel aufweist, die derart ausgebildet und angeordnet sind, um einen Bereich, insbesondere einen horizontalen Schwenkwinkelbereich, zu begrenzen in dem sich die gegenüber der Halterung eingenommenen Positionen der Komponente befinden können, wobei vorzugsweise vorgesehen ist, dass die Begrenzungsmittel auf der Komponente angeordnete Anschlagpunkte und auf der Halterung angeordnete Anschlagflächen umfassen.

12. Armlehne nach einem der vorhergehenden Ansprüche, **dadurch gekennzeichnet, dass** die Arretierungsmittel eine Führungshülse umfassen, die derart ausgebildet und angeordnet ist, dass die Komponente und die Halterung sich nicht unbeabsichtigt voneinander separieren lassen, wobei die Führungshülse mit der Komponente verbunden, insbesondere verschraubt, ist und in einer Durchtrittsöffnung, insbesondere Bohrung, der Komponente und/oder in einer Durchtrittsöffnung, insbesondere Bohrung, der Halterung angeordnet ist und einen Bund aufweist, der derart ausgebildet ist, um an einem Absatz der Durchtrittsöffnung anzuliegen, derart dass ein Durchtreten der Führungshülse durch die Durchtrittsöffnung von der Halterung in Richtung der Komponente verhindert wird.

13. Armlehne nach einem der vorhergehenden Ansprüche, insbesondere nach Anspruch 16, **dadurch gekennzeichnet, dass** die Arretierungsmittel einen Klemmhebel zum Aufbringen einer Klemmkraft zwischen der Komponente und der Halterung umfassen, wobei der Klemmhebel insbesondere mit der Führungshülse verschraubt bzw. verschraubbar ist.

14. Arbeitsmaschine, insbesondere Radlader, mit einer Armlehne nach einem der vorhergehenden Ansprüche.
